# EUROPEAN PATENT APPLICATION

(11) **EP 3 136 707 A1**
(43) Date of publication of application: **01.03.2017**
(21) Application number: 15783119.9
(22) Date of filing: 30.01.2015
(51) Int. Cl.: H04N 5/232

(54) **IMAGE SHOOTING TERMINAL AND IMAGE SHOOTING METHOD**

(30) Priority: 24.04.2014 CN 201410168108
(71) Applicant: Yulong Computer Telecommunication Scientific (Shenzhen) Co. Ltd., Shenzhen, Guangdong 518057 (CN)
(72) Inventor: XIAO, Lifeng, Shenzhen Guangdong 518057 (CN)
(74) Representative: Thibon, Laurent
(86) International application number: PCT/CN2015/071999
(87) International publication number: WO 2015/161698

(57) **Abstract**

The present disclosure provides an image shooting terminal which includes: an image shooting module which includes at least two cameras with different zoom ratios, where the at least two cameras are configured to shoot a scenario; a control module configured to control the image shooting module to shoot the scenario; a region selection module configured to determine image regions corresponding to an image with a predetermined zoom ratio in images with different zoom ratios obtained by the image shooting module according to the predetermined zoom ratio when the control module controls the at least two cameras with different zoom ratios of the image shooting module to shoot a same scenario; and a synthesis module configured to synthesize image regions corresponding to an image with the predetermined zoom ratio determined in images with different zoom ratios by the region selection module, so as to obtain an image with the predetermined zoom ratio. The present disclosure also correspondingly provides an image shooting method. The present disclosure can solve a problem that an existing image shooting module with a higher zoom ratio has a larger thickness and a complicated structure.

## Description

The present application claims the priority from Chinese patent application No. 201410168108.1, titled "Image Shooting Terminal and Image Shooting Method", filed on April 24, 2014 to State Intellectual Property Office, the disclosures of which are hereby incorporated by reference in its entirety.

### Technical Field

The present disclosure relates to the field of terminal shooting, and particularly to an image shooting terminal which is capable of obtaining a larger zoom ratio and having a smaller thickness and an image shooting method.

### Background

Optical zoom is generated through position changes of three parts including a camera shot, an object and a focus. When an imaging plane moves in a horizontal direction, a viewing angle and a focal distance are changed; and farther scenes become clearer, making people feel that objects are progressive . It is apparent that there will surely be two ways to change the viewing angle. One way is to change the focal distance of the camera shot, i.e., optical zoom. The focal distance of the camera shot is changed by changing the relative position of each lens in a zoom camera shot. The other way is to change a size of the imaging plane, i.e., a length of a diagonal line of the imaging plane, this is called digital zoom in digital photography. In fact, the focal distance of the camera shot is not changed in digital zoom, and the viewing angle is changed only by changing an angle of the diagonal line of the imaging plane, so as to generate an effect "equivalent to" the change of the focal distance of the camera shot. Therefore, compared with the digital zoom with a same zoom ratio, the optical zoom has a better image effect.

The longer the camera shot of a digital camera, the larger a movement space of internal lenses and a photosensor, so the zoom ratio is larger. Therefore, to obtain optical zoom of a higher zoom ratio, a camera generally has a large thickness, and for example, the camera is made as an extended camera shot or a periscopic camera shot. An existing periscopic camera shot and an extended camera shot are used in terminals such as mobile phones. A shape of a mobile phone cannot be made to be thinner after a camera shot is installed in the mobile phone due to complicated structures of the camera shot, expensive price and larger volume, so requirements of thinning to terminals such as mobile phones cannot be realized. In addition, performance failure is easily caused by knocking when a camera shot and optical components are used in terminals such as mobile phones due to complicated structures of a camera shot, non-resistance to falling for optical components, so that the periscopic camera shot and the extended camera shot cannot be popular for a long period of time.

Thus, how to provide an image shooting terminal which is capable of obtaining a larger zoom ratio with a smaller thickness and an image shooting method is a technical problem needed to be solved by those skilled in the art.

### Summary

The present disclosure provides an image shooting terminal and an image shooting method for solving a problem in an existing technology that a thickness of a camera module is increased when a picture with a higher zoom ratio is provided.

To achieve the above purpose, the present disclosure provides an image shooting terminal and an image shooting method.

An image shooting terminal includes:
an image shooting module which includes at least two cameras with different zoom ratios, where the at least two cameras are configured to shoot a scenario;
a control module configured to control the image shooting module to shoot the scenario;
a region selection module configured to determine image regions corresponding to an image with a predetermined zoom ratio in images with different zoom ratios obtained by the image shooting module according to the predetermined zoom ratio when the control module controls the at least two cameras with different zoom ratios of the image shooting module to shoot a same scenario and when the image to be obtained has a predetermined zoom ratio greater than a zoom ratio of any of the cameras of the image shooting module; and
a synthesis module configured to synthesize image regions corresponding to an image with the predetermined zoom ratio determined in images with different zoom ratios by the region selection module, so as to obtain an image with the predetermined zoom ratio,
the image shooting terminal further includes a selection module configured to select the predetermined zoom ratio,
where when the selected predetermined zoom ratio is as same as a zoom ratio of one camera in the image shooting module, the control module controls the corresponding camera in the image shooting module to individually shoot so as to obtain the image with the predetermined zoom ratio,
where when the selected predetermined zoom ratio is different from a zoom ratio of any of the cameras in the image shooting module, the control module is configured to control the at least two cameras with different zoom ratios of the image shooting module to shoot a same scenario,
the image shooting terminal further includes a conversion module configured to convert the image synthesized by the synthesis module into an image with a predetermined resolution,
where the image shooting module further includes a correction module configured to perform position correction to images with different focal distances shot by the image shooting module according to distances and position relationships among a plurality of cameras of the image shooting module,
where the at least two cameras with different zoom ratios have a same resolution,
where the at least two cameras are two cameras having different resolutions, and one of the the cameras with a higher resolution has a zoom ratio less than a zoom ratio of the other camera with a lower resolution.

An image shooting method includes steps of:
controlling at least two cameras with different zoom ratios of an image shooting module to synchronously shoot to respectively obtain images with different zoom ratios;
determining image regions corresponding to an image with a predetermined zoom ratio in images with different zoom ratios according to the predetermined zoom ratio of an image to be obtained, where the predetermined zoom ratio is greater than a zoom ratio of any of the cameras of the image shooting module; and
synthesizing an image with the predetermined zoom ratio according to image regions corresponding to images with the predetermined zoom ratio obtained in images with different zoom ratios.

An image shooting method includes steps of:
selecting a predetermined zoom ratio of an image to be obtained;
controlling an image shooting module to shoot according to the selected predetermined zoom ratio; and
determining image regions corresponding to the image with the predetermined zoom ratio in images with different zoom ratios according to the predetermined zoom ratio of the selected and obtained image when the predetermined zoom ratio is greater than a zoom ratio of any of the cameras of the image shooting module.

### Description of the Drawings

Figure 1 is a structural block diagram showing an image shooting terminal provided in embodiments of the technical solution;
Figure 2 is a flow chart showing an image shooting method provided in one embodiment of the technical solution; and
Figure 3 is a flow chart showing an image shooting method provided in another embodiment of the technical solution.

### Detailed Description

To make purpose, technical solution and advantages of the present disclosure more clear, the present disclosure will be further described below in detail in combination with drawings and embodiments. It should be understood that specific embodiments described herein are only configured to explaining the present disclosure, not configured to limiting the present disclosure.

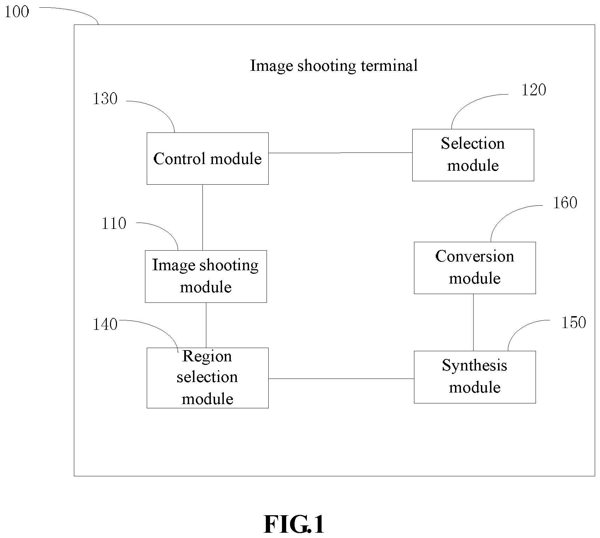

With reference to Figure 1, a first embodiment of the present disclosure provides an image shooting terminal 100. The image shooting terminal 100 may be a smart device such as a mobile phone, a tablet personal computer. Shooting involved in the present disclosure is not limited to photo shooting, video shooting, etc., and will be described below by using photo shooting as an example. Video shooting means that a plurality of photos are synthesized in a time sequence, that is, the present disclosure is also suitable for video shooting.

The image shooting terminal 100 includes an image shooting module 110, a selection module 120, a control module 130, a region selection module 140, a synthesis module 150 and a conversion module 160.

The image shooting module 110 may be a camera module portion in terminals such as a mobile phone, and is configured to perform image sampling (such as photo shooting, video recording, etc.) on an external scenario. The image shooting module 110 includes at least two cameras, and at least two cameras have different zoom ratios. Resolution of each camera may be identical or different.

In the present embodiment, the image shooting module 110 includes two cameras; one camera is a camera with 1x zoom and the other camera is a camera with 2x zoom. The two cameras have a same resolution. The two cameras are adjacently arranged. Preferably, under a condition that a manufacturing process permits, a distance between the two cameras is as short as possible, so that images shot by the two cameras can be matched as much as possible when the two cameras shoot a same scenario. The two cameras of the image shooting module 110 can also be cameras with other zoom ratios as long as the two cameras of the image shooting module 110 have different zoom ratios.

The selection module 120 is configured to select a predetermined zoom ratio. In the present embodiment, a user can use the selection module 120 to select different zoom ratios, such as 1x zoom, 2x zoom or 3x zoom or greater, etc. The predetermined zoom ratio can be as same as a zoom ratio of any of the cameras of the image shooting module 110, and can also be greater than a zoom ratio of any of the cameras of the image shooting module 110.

The control module 130 is configured to control the image shooting module 110 to shoot according to the predetermined zoom ratio selected by the selection module 120.

When the predetermined zoom ratio is greater than a zoom ratio of any of the cameras of the image shooting module 110, the control module 130 controls the at least two cameras with different zoom ratios of the image shooting module to shoot a same scenario. When the selected predetermined zoom ratio is as same as a zoom ratio of one camera in the image shooting module 110, the control module 130 controls a corresponding camera in the image shooting module 110 to individually shoot so as to obtain an image with the predetermined zoom ratio.

In the present embodiment, when 1x zoom is selected to shoot, the control module 130 can control a camera with 1x zoom in the image shooting module 110 to shoot pictures. When 2x zoom is selected to shoot, the control module 130 can control a camera with 2x zoom in the image shooting module 110 to shoot. When 3x zoom or greater is selected, the control module 130 controls the two cameras to simultaneously shoot a same scenario, so as to obtain images with two different zoom ratios. Because the two cameras shoot the same scenario at a same time and the two cameras are close to each other, an image shot by the camera with 2x zoom basically occurs in an image shot by the camera with 1x zoom.

The region selection module 140 is configured to determine image regions corresponding to an image with the predetermined zoom ratio in images with different zoom ratios obtained by the image shooting module 110 according to the predetermined zoom ratio of an image to be obtained when the control module 120 controls the at least two cameras with different zoom ratios of the image shooting module 110 to shoot a same scenario; and the predetermined zoom ratio is greater than a zoom ratio of any of the cameras of the image shooting module 110.

In the present embodiment, the cameras of the image shooting module 110 respectively have 1x zoom and 2x zoom. Because the two cameras shoot the same scenario at the same time, an image obtained by 1x zoom has a large scene shooting range, while the camera with 2x zoom has a scene shooting range less than the scene shooting range of 1x zoom. If an image of 3x zoom is desired, the image obtained by 3x zoom has a smaller image shooting range, that is, an image obtained by 3x zoom shall be a part of an image obtained by 1x zoom and an image obtained by 2x zoom. The region selection module 140 is configured to determine an image region selected from an image of 1x zoom and a corresponding region selected from an image of 2x zoom when an image of 3x zoom is desired. The corresponding region means that image contents in the image region selected from the image of 1x zoom are as same as contents in the image region selected from the image of 2x zoom.

The synthesis module 150 is configured to synthesize image regions corresponding to an image with the predetermined zoom ratio determined in images with different zoom ratios by the region selection module 140, so as to obtain an image with a zoom ratio greater than the zoom ratios of the cameras of the image shooting module 110. The synthesis module 150 is specifically configured to synthesize a plurality of low-resolution photos into a high-resolution photo by adopting a super resolution image reconstruction technology. Specifically, the synthesis module 150 can synthesize an image region selected from an image of 1x zoom and a corresponding image region selected from an image of 2x zoom by adopting an image synthesis algorithm such as the super resolution image reconstruction technology, so as to obtain an image of 3x zoom.

Because contents of the image of 3x zoom are only a part of the corresponding image of 1x zoom or image of 2x zoom, sizes of the image region selected from the image of 1x zoom and the corresponding image region selected from the image of 2x zoom are less than those of an original image of 1x zoom and an original image of 2x zoom. When the image region selected from the image of 1x zoom and the corresponding image region selected from the image of 2x zoom are amplified to a size of a synthesized image, resolution of the image region selected from the image of 1x zoom will be less than that of the original image of 1x zoom and resolution of the corresponding image region selected from the image of 2x zoom will be less than that of the original image of 2x zoom. After synthesized, an obtained image of 3x zoom has a higher resolution. With respect to a working mechanism of the synthesis module 150, an existing image synthesis process can be adopted, and will not be repeated herein.

The conversion module 160 is configured to convert an image synthesized by the synthesis module 150 into an image with predetermined resolution. After the synthesis module 150 conducts synthesis, the synthesized image may have a resolution different from that of an image desired by the user, and the conversion module 160 can convert resolution of the image, so as to obtain the image with resolution required by the user. The conversion module can convert an image obtained by the synthesis module 150 into an image with the predetermined resolution by adopting an image difference algorithm, etc. In the present embodiment, an image obtained by the synthesis module 150 can be converted into an image of 13MP.

It can be understood that the image shooting terminal 100 can further include a correction module. Since there is a distance between the two cameras of the image shooting module 110, images obtained by shooting the same scenario at the same time by the two cameras may be deviated. The correction module can correct the obtained images according to the distance and a position relationship between the two cameras, so that centers of two patterns can overlap.

The image shooting terminal 100 can also include a storage module configured to store high-resolution photos. Specifically, the storage module is configured to store images converted by the conversion module 160 or images synthesized by the synthesis module 150 for users to use subsequently; the storage module can also simultaneously store low-resolution photos prior to synthesis of the synthesis module, so as to allow users to select and use low-resolution photos and/or high-resolution photos according to actual needs for other operations; for example, low-resolution photos are used when transmitting a multimedia message, and high-resolution photos are used when making a front cover.

In the present embodiment, if both of the two cameras have pixel of 13MP, a thickness of the camera of 1x zoom is about 5.1 mm and a thickness of the camera of 2x zoom is about 6.5 mm when a focal distance of the camera of 1x zoom is set as 3.5 mm and a focal distance of the camera of 2x zoom is set as 6.8 mm, so that a thickness of an obtained image shooting module can only be determined according to the camera with a larger thickness. In other embodiments, to have a smaller thickness of the image shooting module 110, it can be realized in such a manner that two cameras with different resolutions are matched. The camera with a lower resolution can be adopted as a camera with a higher zoom ratio, and the camera with a higher resolution can be adopted as a camera with a lower zoom ratio. For the camera with the higher resolution, an image sensor adopted by the camera has a larger size, while for the camera with the lower resolution, an image sensor adopted by the camera has a smaller size. Specifically, the camera with a resolution of 13MP can be adopted for 1x zoom, and has a thickness of about 5.1 mm, while the camera with a resolution of 8MP can be adopted for 2x zoom, and also has a thickness of about 5.1 mm; in this way, the two cameras of the image shooting module 110 may have an approximately same thickness, so as to reduce an overall thickness of the image shooting module 110.

It can be understood that the image shooting terminal 100 can also not include the conversion module 160; and when users has no requirement for resolution of a formed image, an image synthesized by the synthesis module 150 can be directly obtained. The image shooting terminal 100 can also not include the selection module 120, and the image shooting terminal 100 can obtain an image with a zoom ratio greater than zoom ratios of the cameras of the image shooting module 110 by default.

The image shooting terminal 100 provided in the present embodiment adopts images obtained by the image shooting module 110 with a low zoom ratio to conduct synthesis so as to obtain an image with a higher zoom ratio. Because the image shooting module 110 adopts cameras with a lower zoom ratio, a thickness of the image shooting module 110 can be reduced, thereby solving a problem in an existing technology in which a camera with a complicated structure is adopted to obtain an image with a high zoom ratio.

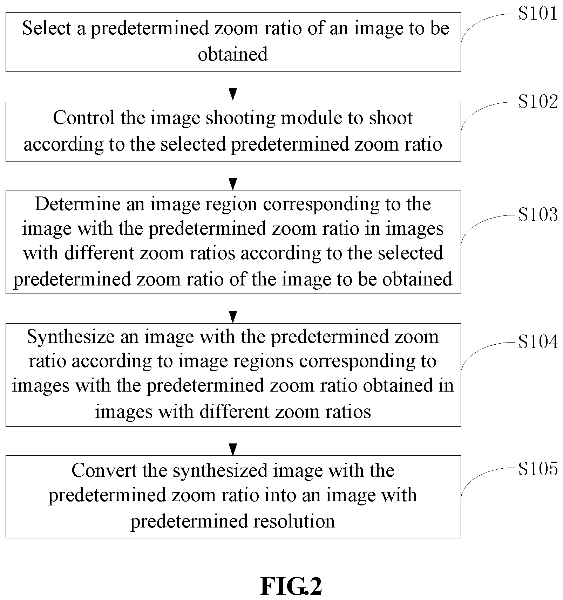

With reference to Figure 2, the technical solution also correspondingly provides an image shooting method. The image shooting method can be completed by adopting the image shooting terminal 100, and the image shooting method includes steps S101 to S104.

In S101, a predetermined zoom ratio of an image to be obtained is selected.

The predetermined zoom ratio of the image to be obtained can be selected as needed. Specifically, the selection module 120 is adopted to select the predetermined zoom ratio of the image to be obtained; and the predetermined zoom ratio of the image to be obtained can be as same as a zoom ratio of one camera of the image shooting module 110, and can also be greater than zoom ratios of cameras of the image shooting module 110.

In S102, the image shooting module is controlled to shoot according to the selected predetermined zoom ratio.

When the selected predetermined zoom ratio of the image to be obtained is as same as a zoom ratio of one camera in the image shooting module 110, the corresponding camera can be controlled to shoot a scenario and obtain an image, so as to complete image shooting.

When the selected predetermined zoom ratio of the image to be obtained is greater than zoom ratios of the cameras of the image shooting module 110, the cameras with different zoom ratios of the image shooting module may be controlled to synchronously shoot to respectively obtain images with different zoom ratios, and then enters step S103.

In S103, an image region corresponding to the image with the predetermined zoom ratio are determined in images with different zoom ratios according to the selected predetermined zoom ratio of the image to be obtained.

In the present embodiment, the cameras of the image shooting module 110 respectively have 1x zoom and 2x zoom. Because the two cameras shoot the same scenario at the same time, an image obtained by 1x zoom has a large scene shooting range, while the camera with 2x zoom has a scene shooting range less than the scene shooting range of 1x zoom. If an image of 3x zoom is desired, the image obtained by 3x zoom has a smaller image shooting range, that is, an image obtained by 3x zoom shall be a part of an image obtained by 1x zoom and an image obtained by 2x zoom. An image region selected from an image of 1x zoom and a corresponding region selected from an image of 2x zoom are determined when an image of 3x zoom is desired. The corresponding region means that image contents in the image region selected from the image of 1x zoom are as same as contents in the image region selected from the image of 2x zoom.

In S104, an image with the predetermined zoom ratio is synthesized according to image regions corresponding to images with the predetermined zoom ratio obtained in images with different zoom ratios.

Two images can be synthesized by adopting an image synthesis algorithm such as the super resolution image reconstruction technology.

It can be understood that, after S102 and prior to S103, images with different zoom ratios are corrected, so as to overlap centers of at least two images with different zoom ratios. In the present embodiment, correction can be performed according to distances and position relationships among a plurality of cameras of the image shooting module 110.

After S104, S105 can also be included, in which the synthesized image with the predetermined zoom ratio is converted into an image with predetermined resolution.

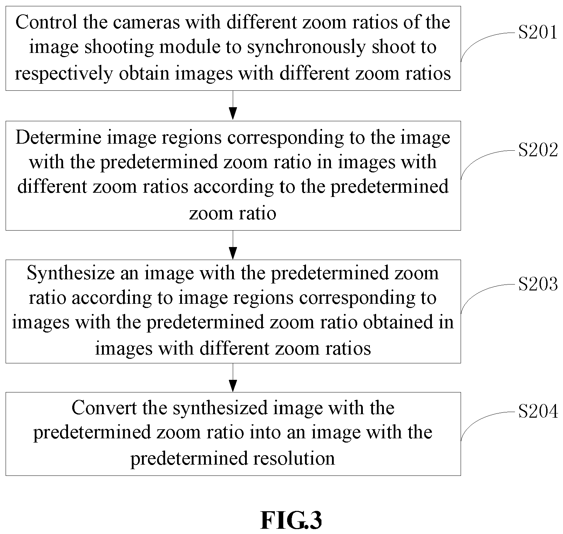

With reference to Figure 3, in an image shooting method provided in another embodiment of the technical solution, if only an image with the predetermined zoom ratio greater than zoom ratios of the cameras of the image shooting module is to be obtained, an image shooting method includes steps S201 to S203.

In S201, the cameras with different zoom ratios of the image shooting module are controlled to synchronously shoot to respectively obtain images with different zoom ratios.

In S202, image regions corresponding to the image with the predetermined zoom ratio are determined in images with different zoom ratios according to the predetermined zoom ratio.

In S203, an image with the predetermined zoom ratio is synthesized according to image regions corresponding to images with the predetermined zoom ratio obtained in images with different zoom ratios.

After S203, S204 can also be included, in which the synthesized image with the predetermined zoom ratio is converted into an image with the predetermined resolution.

The image shooting method provided in the present embodiment adopts images obtained by the image shooting module with a low zoom ratio to conduct synthesis so as to obtain an image with a higher zoom ratio. Because the image shooting module adopts cameras with a lower zoom ratio, a thickness of the image shooting module can be reduced, thereby solving a problem in an existing technology in which a camera with a complicated structure is adopted to obtain an image with a high zoom ratio.

Of course, the present disclosure can also have various other embodiments, and various corresponding variations and deformations can be made by those skilled familiar with the art according to the present disclosure without departing from the spirit and essence of the present disclosure, but these corresponding variations and deformations should belong to the protection scope of appended claims of the present disclosure.

## Claims

1. An image shooting terminal, comprising:
an image shooting module which includes at least two cameras with different zoom ratios, wherein the at least two cameras are configured to shoot a scenario;
a control module configured to control the image shooting module to shoot the scenario;
a region selection module configured to determine image regions corresponding to an image with a predetermined zoom ratio in images with different zoom ratios obtained by the image shooting module according to the predetermined zoom ratio when the control module controls the at least two cameras with different zoom ratios of the image shooting module to shoot a same scenario and when an image to be obtained has a predetermined zoom ratio greater than a zoom ratio of any of the cameras; and
a synthesis module configured to synthesize image regions corresponding to the image with the predetermined zoom ratio determined in images with different zoom ratios by the region selection module, so as to obtain an image with the predetermined zoom ratio.

2. The image shooting terminal according to claim 1, further comprising a selection module configured to select the predetermined zoom ratio.

3. The image shooting terminal according to claim 2, wherein when the selected predetermined zoom ratio is as same as a zoom ratio of one camera in the image shooting module, the control module controls a corresponding camera in the image shooting module to individually shoot so as to obtain the image with the predetermined zoom ratio.

4. The image shooting terminal according to claim 2, wherein when the selected predetermined zoom ratio is different from a zoom ratio of any of the cameras in the image shooting module, the control module is configured to control the at least two cameras with different zoom ratios of the image shooting module to shoot a same scenario.

5. The image shooting terminal according to claim 1, further comprising a conversion module configured to convert the image synthesized by the synthesis module into an image with a predetermined resolution.

6. The image shooting terminal according to claim 1, wherein, the image shooting module further comprises a correction module configured to perform position correction to images with different focal distances shot by the image shooting module according to distances and position relationships among a plurality of cameras of the image shooting module.

7. The image shooting terminal according to claim 1, wherein, the at least two cameras with different zoom ratios have a same resolution.

8. The image shooting terminal according to claim 1, wherein, the at least two cameras are two cameras having different resolutions, and one of the cameras with a higher resolution has a zoom ratio less than a zoom ratio of the other camera with a lower resolution.

9. An image shooting method, comprising:
controlling at least two cameras with different zoom ratios of an image shooting module to synchronously shoot to respectively obtain images with different zoom ratios;
determining image regions corresponding to an image with a predetermined zoom ratio in images with different zoom ratios according to the predetermined zoom ratio of an image to be obtained, wherein the predetermined zoom ratio is greater than a zoom ratio of any of the cameras of the image shooting module; and
synthesizing an image with the predetermined zoom ratio according to image regions corresponding to images with the predetermined zoom ratio obtained in images with different zoom ratios.

10. An image shooting method, comprising:
selecting a predetermined zoom ratio of an image to be obtained;
controlling an image shooting module to shoot according to the selected predetermined zoom ratio; and
selecting or determining image regions corresponding to the image with the predetermined zoom ratio in images with different zoom ratios according to the predetermined zoom ratio of the selected and obtained image when the predetermined zoom ratio is greater than a zoom ratio of any of the cameras of the image shooting module.
